# EUROPEAN PATENT APPLICATION

(11) **EP 1 050 394 A1**
(43) Date of publication of application: **08.11.2000**
(21) Application number: 00108765.9
(22) Date of filing: 25.04.2000
(51) Int. Cl.: B29C 49/72

(54) **Device and method for removing flash from blow-moulded articles**

(30) Priority: 26.04.1999 IT MI990875
(71) Applicant: Uniloy Milacron S.r.l.-S.U., 50041 Calenzano (IT)
(72) Inventor: Secchi, Stefano, 20081 Abbiategrasso (Milano) (IT); Bertolotti, Luca, 20080 Ozzero (Milano) (IT)
(74) Representative: Petruzziello, Aldo

(57) **Abstract**

Device (10) for removing flash (5) from plastic articles (1) produced by blow-moulding, said flash (5) being connected to the blow-moulded article (1) by thin plastic bridges (6); the device (10) including at least one source of thermal energy (3), to convey thermal energy to the plastic bridges (6), so as to cause their melting and consequent complete separation of flash (5) from the article (1); the source of thermal energy (3) being mounted on a moving support (4), so as to follow the perimetral contour of the article (1).

## Description

The present invention is related to a device and method for removing scrap, commonly called flash, which is present on blow-moulded plastic articles.

Articles produced by extrusion-blow-moulding present scraps of unblown plastic material, called flash, which are connected to the article by thin bridges of compressed plastic material. For articles of simple geometry, such as drums or containers with rectangular, cubical, or cylindrical shape, flash is located at the top and bottom edges of the article and weighs in general 10-25% of the total weight of the article. For technical articles with complex geometry, for example fuel tanks, which show a very irregular shape, flash may even contour the whole article and represent more than 50% of the total weight.

The flash has to be removed from the blow-moulded article to be in general reground and reused in production.

According to the prior art, flash is removed by hand, using appropriate knives or blades. In order to increase production rate, reduce personnel and the risks due to the use of sharp blades, several automatic deflashing systems have been devised.

Such automatic deflashing systems, according to the prior art, can be in-line or off-line to the production line, and all are characterised by the use of mechanical energy for flash removal. A standard in-line automatic deflashing system consists of deflashing masks, reproducing the shape of the article, which have the function of holding the article in the correct position, while other masks or grippers remove the flash by applying compression or traction forces.

In the case of large articles, for example containers of 1000 l capacity, made of very tough materials like polycarbonate or high-molecular-weight polyethylene, the force required to remove flash can be very high, as in the case of impact systems using a large amount of kinetic energy. This type of systems show many drawbacks, both for the amount of energy employed to perform their function and because this energy can deform or break the article to be deflashed.

Moreover, mechanical flash removal leaves a rough and sharp line on the article, and sometimes even filaments or burrs of material, which compromise the aesthetics and functionality of the article and can require successive finishing operations.

Finally, deflashing systems with sharp edges moving at high speed could be dangerous for the operator's safety and often very noisy.

The aforesaid problems are partially solved in the description of Patent Application DE 198 04 265 A1. In this document, a device and method using a source of thermal energy to soften the material bridge between article and flash are described, so as to reduce significantly the energy required to remove flash with conventional systems. This system has however some drawbacks:
- The necessity to tear off the flash immediately after heating the material bridge, since it would cool down immediately due to its thinness, compels to provide support systems for the thermal-energy source which move along at least two axes. Especially in the case of articles with complex shape, this leads to realise very complicated devices.
- The softening effect of the material bridge makes flash removal easier, but could cause the formation of burrs and filaments, especially with high-melt-strength materials. These burrs can be removed by the thermal-energy source itself, but this would delay and complicate the deflashing operation.
- The device according to the prior art requires grippers in order to tear off the flash, after softening the material bridge. It is evident that these grippers cannot be used when the flash is completely enclosed by the article, for example that within the recess of a handle of a container.

An aim of the invention is to eliminate the aforementioned drawbacks by providing a deflashing device for blow-moulded articles which is versatile, cheap, and easy to be realised.

Another aim of the present invention is to provide a method for deflashing blow-moulded articles which is fast and at the same time leaves a smooth article surface where the flash has been removed.

These aims are achieved by the device and method according to the invention, having the characteristics listed in the appended independent claims 1 and 9 respectively.

Preferred embodiments of the invention will be apparent from the dependent claims.

The device for deflashing blow-moulded articles makes use of a source of thermal energy to cut completely the bridge of material between the article and the flash, without using mechanical energy.

The blow-moulded article coming out of the mould is transferred to a deflashing unit, in which it is held in the correct position by appropriate devices, for example grippers clenching on the flash. The thermal-energy source, mounted on a moving support, follows the flash profile cutting the bridge of material that connects the flash to the article. The flash, therefore, separated by the article without using mechanical force, can fail on a conveyor belt or be taken out of the working zone by appropriate means or by hand.

The source of thermal energy, in addition to removing flash completely, melts partially the article surface, cancelling any burr and leaving a smooth and polished surface.

The advantages of the device and method according to the invention are evident. All systems for mechanical flash removal are eliminated, for example grippers or sharp edges, which demand exaggerated consumption of mechanical energy and are moreover dangerous for the operator.

Further characteristics of the invention will be clarified by the following detailed description, referring to a purely exemplary and non limiting embodiment thereof, illustrated in the appended drawings, in which:

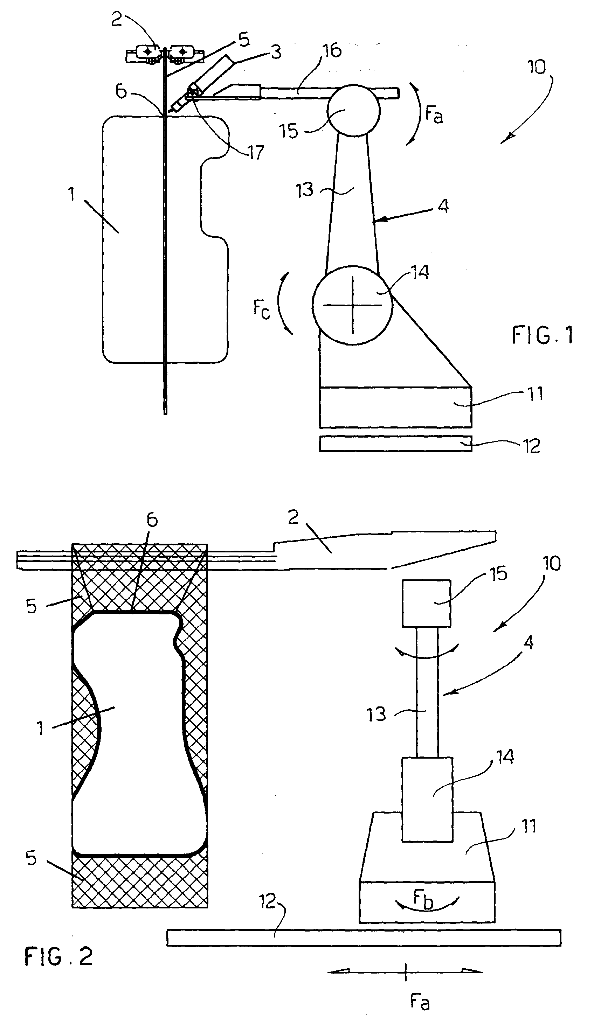

Fig. 1 is a schematic side elevation view of a deflashing device of blow-moulded articles according to the invention, shown in operation;
Fig. 2 is a view from the right side of Fig. 1.

With the help of the figures a deflashing device for blow-moulded articles according to the invention is described.

In the extrusion-blow-moulding process, plastic material extruded through an extrusion head forms a parison which is advanced to a moulding unit, wherein it is closed within two half-moulds and, after blowing, takes the form of the part or article desired, which in the example of the figures is a tank 1 of irregular shape.

In the blowing phase, a portion of the parison is not enclosed within the mould, and forms a strip of material 5, called flash, which, in the case presented, surrounds the article 1 and is a production scrap. Flash 5 is connected to the article 1 by thin bridges 6 of plastic material.

After the article 1 is moulded and the plastic material cooled, the article is transferred in a station in which flash 5 is removed. In general grippers 2 are used for grasping the flash 5 and transferring the article 1 from the moulding unit to the deflashing unit holding it in the correct position.

In the deflashing unit a device for removing flash according to the invention is provided, indicated as a whole with reference number 10. The deflashing device 10 includes a source of thermal energy 3.

The source of thermal energy 3 can be a hot-air jet, a focalised electromagnetic radiation, as for example a laser beam, or even an open flame.

The source of thermal energy 3 is mounted upon a moving support 4, which is able to follow the profile of flash 5 contouring the article 1. The movement of the moving support 4 can be powered by a simple linear actuator, a pantograph, or one can resort to a multi-axis robot; in any case the thermal-energy source is precisely directed on the bridges of material 6 connecting flash 5 to the article 1.

In the described embodiment of the invention the moving support 4 consists of a robot comprising a base 11 which slides linearly on a rail 12 in the direction of arrow Fa and rotates around a vertical axis according arrow Fb. The moving support 4 includes a rod 13 mounted between two hinge means or ball-joints 14 and 15. The ball-joint 14 connects rod 13 to the base 11, allowing rotation of the rod 13 in direction of arrow Fc. The ball-joint 15 connects the rod 13 to an arm 16, so that the arm 16 can rotate relative to the rod 13, in direction of arrow Fd. On the free edge of arm 16 the thermal-energy source 3 is mounted by means of a pin 17, with the possibility to rotate around the axis of the pin.

By actuating the moving support 4 properly, the thermal-energy source 3 is directed against the bridges of material 6 and follows the perimetral profile of article 1. The bridges of material 6 are molten and, therefore, flash 5 separates from the article 1 and either falls automatically on a conveyor belt (not shown), or can be taken out by other appropriate means, for example the gripper 2 used for transportation of part 1.

The source of thermal energy 3, in addition to flash removal, melts also partially the surface of the article in contact with the bridges 6, so removing any possible burr and leaving a smooth and polished surface.

## Claims

1. Device for removing flash (5) from plastic articles (1) obtained by blow-moulding, said flash (5) being connected to the blow-moulded article (1) through thin bridges of material (6), characterised in that said device (10) includes at least a source of thermal energy (3), to convey thermal energy to said material bridges (6), so as to cause their melting and consequent complete separation of the flash (5) from the article (1).

2. Device according to claim 1, characterised in that said source of thermal energy (3) is mounted on a moving support (4), so as to be able to follow the perimetral contour of the article (1) during removal of flash (5).

3. Device according to claim 2, characterised in that said moving support (4) is actuated by at least a linear actuator.

4. Device according to claim 2, characterised in that said moving support (4) is actuated by pantograph means.

5. Device according to claim 2, characterised in that said moving support (4) is actuated by a robot movable on at least two axes.

6. Device according to claim 5, characterised in that said moving support (4) includes a base support (11) sliding linearly on a rail (12) and rotating around a vertical axis, which supports a system of connecting rod (13) and arm (16), said source of thermal energy (3) being pivotally mounted at an end of the arm (16).

7. Device according to any of previous claims, characterised in that said source of thermal energy (3) is a hot-air jet, a focalised radiation, or an open flame.

8. Device according to any of previous claims, characterised in that it is used in conjunction with means for taking the removed flash (5) out of the working zone.

9. Method for removing flash (5) from plastic articles (1) obtained by blow-moulding, characterised in that thermal energy is conveyed on material bridges (6) connecting the flash (5) to the article (1), so as to obtain melting of said material bridges (6) and consequent complete separation of flash (5) from article (1).

10. Method according to claim 9, characterised in that said thermal energy (3) is conveyed along the whole perimetral contour of article (1), in which flash (5) is present.

11. Method according to claims 9 or 10, in which the possibility to bring the removed flash out of the working zone is also provided.
